# FASCICULE DE BREVET EUROPEEN

(11) **EP 2 512 855 B1**
(45) Date de publication et mention de la délivrance du brevet: **02.04.2014**
(21) Numéro de dépôt: 10798537.6
(22) Date de dépôt: 16.12.2010
(51) Int. Cl.: B60K 7/00, B60K 17/04

(54) **MOYEU MOTORISE COMPRENANT DES MOYENS DE COUPLAGE ET DE DECOUPLAGE**
MOTORISIERTE NABE MIT KUPPLUNGS- UND ENTKUPPLUNGSMITTELN
MOTORISED HUB WITH COUPLING/DECOUPLING MEANS

(30) Priorité: 16.12.2009 FR 0959072
(43) Date de publication de la demande: 24.10.2012
(73) Titulaire: Compagnie Générale des Etablissements Michelin, 63000 Clermont-Ferrand (FR); MICHELIN Recherche et Technique S.A., 1763 Granges-Paccot (CH); Renault S.A.S., 92100 Boulogne-Billancourt (FR)
(72) Inventeur: BAUMGARTNER, Gérard, CH-1684 Mezieres (CH); WALSER, Daniel, CH-1721 Cormerod (CH)
(74) Mandataire: Casalonga, Axel
(86) Numéro de dépôt international: PCT/EP2010/069895
(87) Numéro de publication internationale: WO 2011/073320

(56) Documents cités:
- DE-A1- 10 338 659

## Description

La présente invention concerne la liaison au sol des véhicules automobiles à traction électrique, en particulier leurs roues motorisées.

Dans ce domaine, on connaît un certain nombre de propositions comme celles des documents EP 0878332, EP 1630026, WO 2006/032669, US 2007/0257570, WO 2007/083209 ou WO 2009/124892. Le document

US 2007/0257570 décrit un moyen selon le préambule de la revendication 1.

Dans la présente demande, on utilise l'expression « moyeu motorisé » pour désigner l'ensemble mécanique comprenant le moyeu, le porte-moyeu, le guidage du moyeu par rapport au porte-moyeu, la motorisation électrique et les moyens de freinage du moyeu. Le moyeu motorisé est donc destiné d'une part à recevoir une roue équipée par exemple d'un pneumatique et à porter d'autre part un véhicule, généralement par l'intermédiaire de moyens de suspension. Dans la présente demande, on utilise également l'expression « roue motorisée » pour désigner l'ensemble mécanique comprenant le moyeu motorisé défini ci-dessus et la roue correspondante.

L'une des difficultés en vue de l'adoption de tels moyeux motorisés sur les véhicules de série est la compatibilité avec les solutions déjà adoptées et validées par les constructeurs pour certains éléments comme les systèmes de suspension et les roues. Une autre difficulté est d'obtenir un système compact, simple et le plus léger possible afin d'en rendre le coût acceptable pour cette industrie.

En particulier, l'intégration des moteurs électriques à l'intérieur même des roues est particulièrement désirable parce que l'adoption de la traction électrique passe souvent par la nécessité d'embarquer des batteries pour stocker l'énergie électrique ce qui, même avec les technologies les plus performantes connues à ce jour, oblige à consacrer un volume suffisant aux batteries à bord du véhicule, sauf à réduire énormément l'autonomie d'un véhicule électrique. Un raisonnement similaire peut être fait dans le cas des véhicules à pile à combustible ou hybride parallèle.

Par ailleurs, si l'on veut pouvoir développer un couple de traction suffisant, il s'avère nécessaire d'installer des moyens de réduction car on ne peut pas, avec un moteur électrique suffisamment compact, développer un couple adéquat pour assurer directement la traction d'un véhicule de tourisme.

De plus les véhicules hybrides parallèle dont le moteur thermique permet généralement de rouler à vitesse relativement élevée (par exemple 150 km/h) représentent une difficulté particulière quant au choix du rapport de réduction de la traction électrique.

Enfin, on est en général conduit à devoir intégrer à la roue, non seulement le moteur électrique, les moyens de réduction nécessaire associés, mais aussi un dispositif de freinage mécanique (frein à disque ou à tambour de friction).

L'invention a donc pour objet de résoudre tout ou partie de ces difficultés.

L'invention propose donc un moyeu motorisé pour la motorisation électrique d'un essieu d'un véhicule automobile à traction hybride, ledit moyeu motorisé comprenant un moyeu destiné à recevoir une roue, le moyeu étant monté rotatif par rapport à un porte-moyeu selon un axe de moyeu, le moyeu motorisé comprenant une machine électrique de traction, la machine électrique comprenant un stator externe lié au porte-moyeu et un rotor interne dont l'axe de rotation est distant de l'axe de moyeu, le moyeu motorisé comprenant des moyens de réduction agissant entre le rotor de la machine électrique et le moyeu, le moyeu motorisé comprenant des moyens de couplage/découplage aptes à adopter une position de couplage dans laquelle la rotation de la machine électrique est couplée à la rotation du moyeu et une position de découplage dans laquelle la rotation de la machine électrique est découplée de la rotation du moyeu, le moyeu motorisé étant **caractérisé en ce que** les moyens de couplage/découplage sont disposés entre les moyens de réduction et le moyeu.

De préférence, les moyens de couplage/découplage comprennent un mécanisme à crabot et baladeur, le baladeur étant coaxial au moyeu.

De préférence, les moyens de réduction comprennent un pignon moteur destiné à être lié à l'arbre de la machine électrique et une couronne dentée destinée à être liée au moyeu.

De préférence, les moyens de réduction comprennent deux étages de réduction.

De préférence encore, un premier étage de réduction est constitué par l'engrenage du pignon moteur et d'une roue dentée lié à un arbre intermédiaire, un deuxième étage de réduction étant constitué par l'engrenage d'un pignon de réducteur lié à l'arbre intermédiaire et de la couronne dentée destinée à être liée au moyeu.

De préférence encore, l'arbre intermédiaire est parallèle à l'axe de moyeu.

De préférence, le porte-moyeu est une fusée autour de laquelle tourne le moyeu.

De préférence, un carter contient les moyens de réduction et les moyens de couplage/découplage et porte la machine électrique, ledit carter étant monté rotatif par rapport au porte-moyeu, cette rotation s'effectuant selon l'axe de moyeu.

Selon une première variante préférée, le baladeur est constamment solidaire en rotation des moyens de réduction, le baladeur comportant des cannelures intérieures cylindriques, les cannelures du baladeur étant aptes à s'engager, en position de couplage, sur des cannelures extérieures du moyeu.

Selon une deuxième variante, le baladeur comporte des dentures frontales aptes à coopérer, en position de couplage, avec des dentures frontales solidaires de la couronne de moyeu.

De préférence, le moyeu motorisé comprend en outre un frein à disque, le disque de frein étant placé à l'extérieur du carter par rapport au véhicule.

L'invention propose également une roue motorisée comprenant un moyeu motorisé tel que décrit ci-dessus.

L'invention propose également véhicule comprenant deux telles roues motorisées.

De préférence, les deux roues motorisées sont disposées sur l'essieu arrière dudit véhicule, les porte-moyeux de deux roues motorisées étant chacun solidaires d'un bras tirés de l'essieu arrière.

De préférence encore, une bielle (101) contrôle la rotation de chacun des deux carters par rapport à chacun des porte-moyeux.

D'autres caractéristiques et avantages de l'invention apparaîtront grâce à la description de modes préférés de réalisation. Les figures représentent respectivement:
- Figure 1 : vue plane selon l'axe de moyeu d'un premier mode de réalisation du moyeu motorisé selon l'invention.
- Figure 2 : vue en coupe de ce mode de réalisation selon la ligne brisée B-B visible à la figure 1.
- Figure 3 : vue en coupe de ce mode de réalisation selon la ligne droite C-C visible à la figure 1.
- Figure 4 : vue d'ensemble en perspective du moyeu motorisé des figures précédentes.
- Figure 5 : vue en coupe et en perspective d'un deuxième mode de réalisation de l'invention.
- Figure 6 : vue en coupe d'un détail préférentiel de réalisation de l'invention.

Sur l'ensemble des figures, les éléments identiques ou similaires portent la même référence. Leur description n'est donc pas systématiquement reprise.

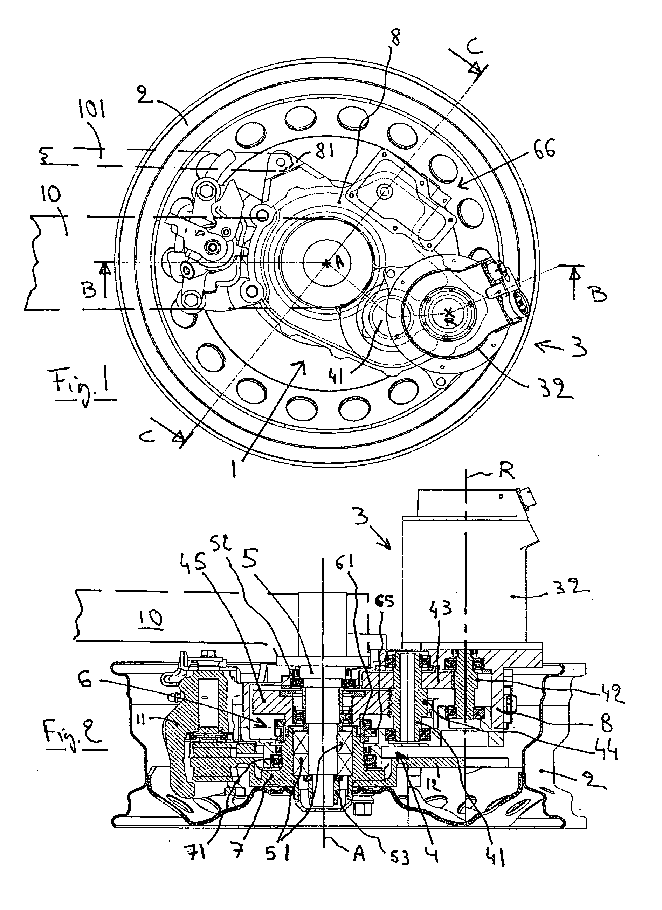

Les figures 1 à 4 représentent un premier mode de réalisation d'une roue motorisée selon l'invention. Le moyeu motorisé 1 est destiné à guider et contrôler la rotation d'une roue 2. Le pneumatique a été omis sur les figures. Un moyeu 7, destiné à recevoir la roue 2, est monté tournant par rapport à un porte-moyeu 5 selon un axe de moyeu A par l'intermédiaire de roulements de moyeu 51.

L'axe de moyeu A est une référence constante dans la présente demande, c'est par rapport à cet axe que l'on se réfère pour qualifier une orientation de « radiale » ou d'« axiale ». Pour rappel et selon l'usage consacré dans le domaine du pneumatique ou de la roue, une orientation axiale est une orientation parallèle à l'axe du moyeu et une orientation radiale est une orientation perpendiculaire à l'axe du moyeu.

Une machine électrique 3 assure la motorisation et le cas échéant le freinage du moyeu par l'intermédiaire de moyens de réduction 4. Pour alléger le dessin de la machine électrique, on a représenté uniquement le fourreau extérieur du stator 32 et ses extrémités.

Les moyens de réduction 4 comprennent de préférence deux étages de réduction. Le pignon moteur 42 est entraîné par l'arbre du rotor (non représenté). Le pignon moteur 42 engrène avec une roue intermédiaire 43 d'un arbre intermédiaire 41. L'arbre intermédiaire 41 comporte un pignon intermédiaire 44 engrenant avec une couronne de moyeu 45. Le rapport de réduction global est de préférence supérieur à 15.

Une caractéristique essentielle du moyeu motorisé selon l'invention est qu'il comprend des moyens de couplage/découplage 6 permettant d'établir ou d'interrompre la transmission de couple entre les moyens de réduction 4 et le moyeu 7. Sur l'exemple des figures 1 à 4, ces moyens de couplage/découplage ont la forme d'un système de crabotage par baladeur axial 61. Le baladeur comporte de manière connue en soi des cannelures internes aptes à coopérer avec des cannelures externes correspondantes et de la couronne 45 et du moyeu 7. Ce type de crabotage peut être qualifié de « crabotage cylindrique ».

Une fourchette 65 commande la position axiale du baladeur 61 entre une position de couplage et une position de découplage. Dans la position de couplage représentée ici, le baladeur chevauche les deux pièces et transmet le couple entre la couronne dentée 45 et le moyeu 7. Cette transmission est interrompue dans la position de découplage. De préférence, dans la position de découplage, le baladeur reste solidaire des moyens de réduction comme c'est le cas du mode de réalisation représenté ici. De cette façon, lorsque le véhicule roule en mode découplé et que la machine électrique est arrêtée, le moyeu est la seule pièce en mouvement alors que les moyens de réduction et le baladeur sont immobiles.

La fourchette 65 qui commande le baladeur peut être contrôlée par un actionneur 66 à vis 67 et écrou 68 comprenant un petit moto-réducteur électrique 69. Un électro-aimant peut également assurer cette commande.

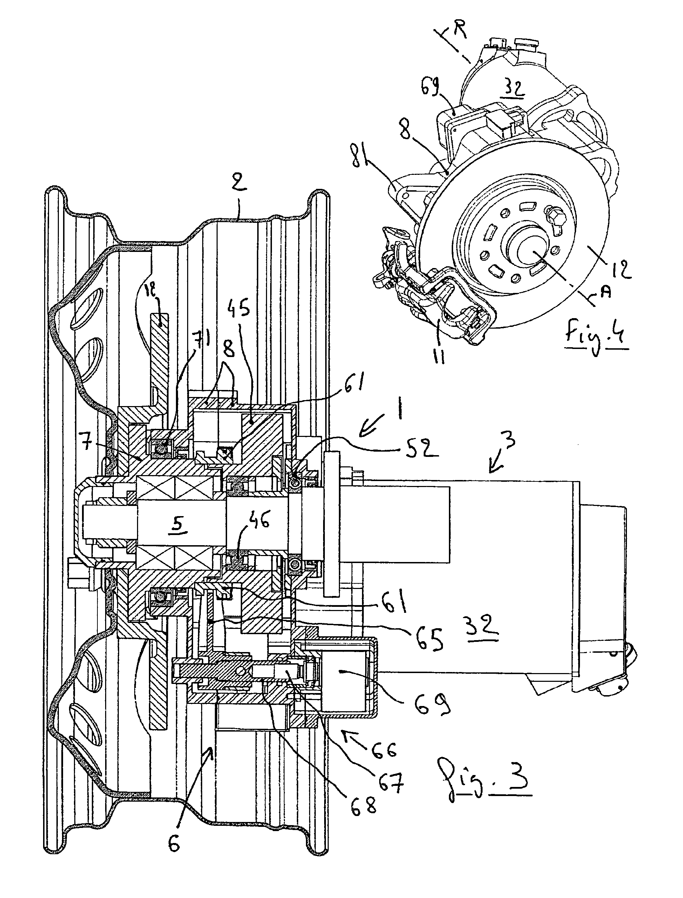

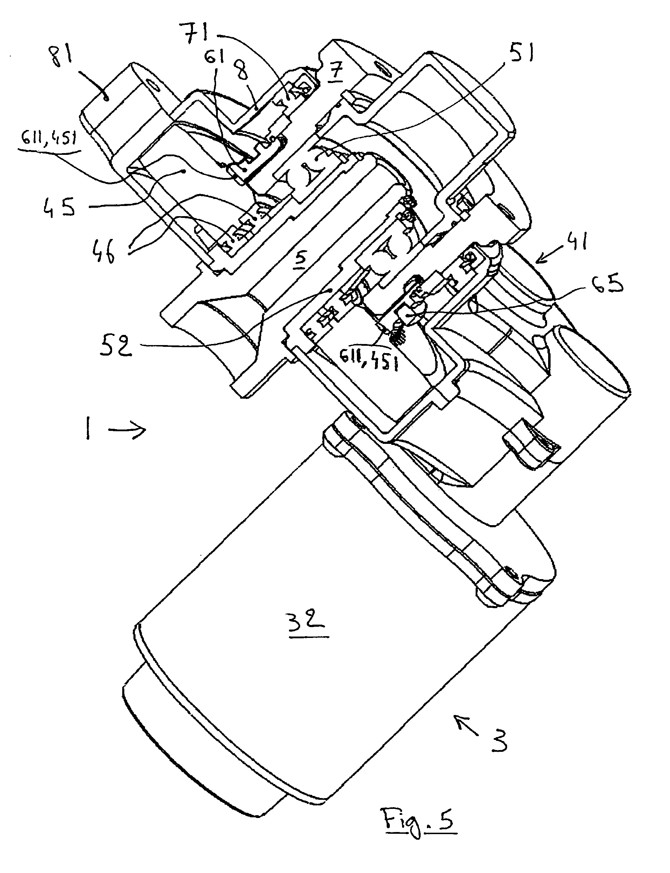

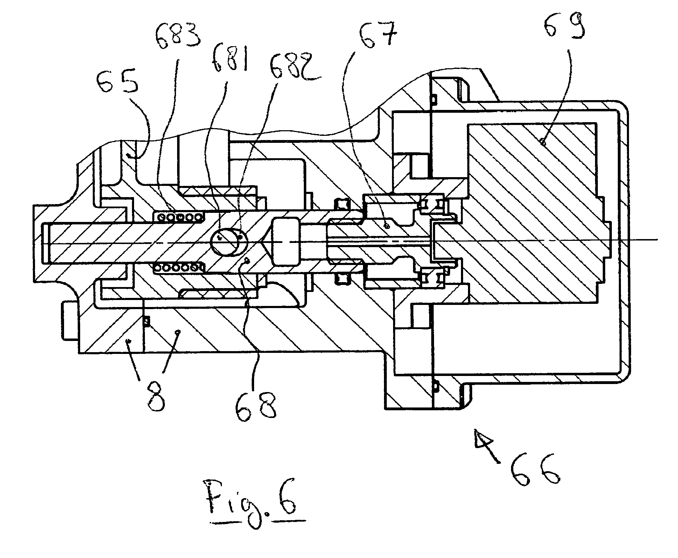

On a représenté à la figure 6 un mode de réalisation préféré de cette commande par un actionneur électrique 66. Au-delà du principe décrit ci-dessus et illustré à la figure 3, on voit ici qu'un trou oblong 682 autorise un mouvement axial de la goupille 681 qui lie la fourchette 65 à l'écrou 68 de l'actionneur. La position de la fourchette 65 par rapport à l'écrou 68 est précontrainte par un ressort 683 qui tend à pousser la fourchette vers la gauche de la figure et l'écrou vers la droite. Ainsi lorsque l'écrou tend à déplacer la fourchette vers la droite de la figure, la liaison écrou/fourchette est rigide. Inversement, la liaison est élastique (au-delà de l'effort de précontrainte exercé par le ressort) lorsque la fourchette subit un effort axial de la part du baladeur qui tendrait à déplacer la fourchette vers à la droite plus rapidement que le mouvement donné à l'écrou par le moto-réducteur. Par exemple, lors d'un découplage au cours duquel subsisterait un couple significatif (moteur ou freineur), le baladeur peut être poussé axialement lorsque les chanfreins des dents du crabot viennent en appui contre les chanfreins des dents du baladeur. Ce déplacement quasi-instantané pourrait occasionner des dégâts irréversibles aux moyens de couplage/découplage comme par exemple une déformation permanente de la fourchette si le degré de liberté que l'on vient de décrire ne les en protégeait pas. Ce montage préféré de l'actionneur 66 décrit ici dans le contexte du premier mode de réalisation est également intéressant dans le contexte du deuxième mode de réalisation décrit plus loin en référence à la figure 5.

L'ensemble de la transmission, c'est à dire l'ensemble des fonctions de réduction et de couplage/découplage, est logé dans un carter 8. le carter 8 peut en outre contenir une quantité adéquate d'un lubrifiant afin de lubrifier l'ensemble par barbotage.

L'axe de rotation R du rotor de la machine électrique est distant de l'axe de moyeu A et de préférence parallèle à celui-ci. Le stator 32 de la machine électrique est lié en rotation au porte-moyeu 5. Cette liaison, nécessaire à la transmission du couple, peut être rigide et directe mais elle peut de préférence être indirecte afin d'autoriser, comme représenté ici, un mouvement relatif de rotation à l'occasion des débattements de suspension. Ce mouvement relatif est bien sûr limité et a pour but de permettre une certaine indépendance entre le couple transmis et les rigidités dynamiques (verticale et horizontale) du dispositif de suspension. Ici, le stator 32 est donc solidaire du carter 8 alors que le carter peut lui-même pivoter par rapport au porte-moyeu 5 et au moyeu 7 par l'intermédiaire de roulements respectivement 52 et 71. La rotation du carter par rapport au porte-moyeu est contrôlée par une bielle 101 (voir figure 1) agissant entre le carter (fixation 81) et la caisse du véhicule (non représenté).

Le porte-moyeu 5 a de préférence la forme d'une fusée sur laquelle les roulements de moyeu 51 sont axialement serrés par un écrou 53 à son extrémité extérieure. La partie intérieure des roulements de moyeu est donc fixe (solidaire de la fusée 5) et la partie extérieure tourne avec le moyeu 7.

Le porte-moyeu 5 peut être fixé au bout d'un bras tiré 10 d'un essieu par exemple un essieu arrière torsible d'un véhicule hybride dont les roues avant sont motorisées par un moteur thermique. Comme on le voit à la figure 1, la bielle 101 et le bras tiré 10 coopèrent alors pour permettre de transmettre un couple à la roue et aussi pour contrôler la rotation du carter 8 en fonction du débattement de suspension. Selon les longueurs et les orientations précises du bras et de la bielle, on comprend qu'on peut par exemple obtenir des effets tendant à charger ou à décharger la suspension en cas de freinage ou d'accélération mais aussi une variation de la garde au sol du moteur ou une réduction de l'intrusion du stator 32 en fin de course dans le volume de la caisse du véhicule.

La figure 4 montre en perspective le moyeu motorisé 1 des figures précédentes, représenté cette fois sans roue, tel que vu depuis l'extérieur du véhicule. On voit bien le système de freinage conventionnel (pince 11 et disque 12), le carter 8, le stator 32 de la machine électrique ainsi que le moteur de commande 69 des moyens de couplage/découplage.

La figure 5 représente un deuxième mode de réalisation d'un moyeu motorisé selon l'invention. Une différence essentielle avec le premier mode de réalisation réside dans le fait que les moyens de couplage/découplage utilisent un crabotage que l'on peut qualifier de « crabotage frontal ». Le couplage des moyens de réduction au moyeu a ici lieu par l'intermédiaire de dentures complémentaires 611, 451 taillées respectivement en extrémité du baladeur 61 et sur le flanc de la couronne dentée 45. Le baladeur est donc poussé contre la couronne pour adopter la position de couplage. Le baladeur est solidaire en rotation du moyeu par l'intermédiaire de cannelures cylindriques complémentaires de manière similaire au premier mode de réalisation. Cependant, à la différence du premier mode de réalisation, cette liaison en rotation est toujours maintenue, y compris en position de découplage. Le baladeur restant solidaire en rotation du moyeu, c'est à dire qu'il est entraîné en rotation dès que le véhicule se déplace, y compris grâce à une autre force que la traction de la machine électrique comme par exemple dans le cas d'un véhicule hybride mu par son moteur thermique.

De manière similaire au premier mode de réalisation, le moyeu motorisé selon ce deuxième mode de réalisation est de préférence monté tournant par rapport aux éléments de suspension du véhicule, par exemple sur un bras tiré d'un essieu arrière. Pour ce faire, une douille 52 est ici montée glissante sur la fusée 50 et porte le carter 8 ainsi que toutes les autres pièces comme les roulements de moyeu 51 et de couronne 46. De cette manière, l'ensemble du moyeu motorisé peut être facilement monté ou démonté de la fusée. Une bielle (non représentée sur la figure 5) ancrée sur sa fixation 81 peut contrôler la position angulaire du carter (et donc de la machine électrique) de manière similaire à ce qui est décrit plus haut pour le premier mode de réalisation.

Une manière avantageuse de construire un véhicule hybride est de combiner une motorisation thermique conventionnelle de l'essieu avant et une motorisation électrique des roues de l'essieu arrière selon l'invention. La source d'énergie électrique peut être un ensemble de batteries ou de super-condensateurs, une pile à combustibles, un réseau urbain à la manière des trolley-bus ou toute autre source électrique disponible.

Sur les différentes figures, on a représenté une seule machine électrique. Naturellement, on peut selon l'invention mettre en oeuvre deux ou plusieurs machines pour chaque moyeu, les machines engrenant chacune par l'intermédiaire d'un pignon moteur propre sur des moyens de réduction communs. Grâce à une motorisation multiple, on peut augmenter le couple disponible et/ou réduire les dimensions axiale et radiale des machines électriques.

De même, on a systématiquement représenté un frein à disque. Il s'agit en effet d'un mode de réalisation préféré mais l'homme du métier sait que dans certaines situations, il peut être préférable d'utiliser un frein à tambour en lieu et place du frein à disque.

Quel que soit le mode de réalisation de l'invention, les moyens de réduction sont de préférence réversibles afin de permettre l'utilisation de la machine électrique en mode freinage. L'énergie électrique récupérée par la machine électrique en mode freinage peut être stockée ou dissipée de manière connue en soi.

Une caractéristique essentielle des moyeux motorisés de l'invention est le choix que l'on a fait d'une machine électrique à rotor interne dont l'axe de rotation est distant de l'axe de moyeu et parallèle au dit axe de moyeu, c'est à dire non concentrique.

Un moyeu motorisé selon l'invention permet donc de coupler/découpler la motorisation électrique à tout moment, y compris pendant le déplacement du véhicule. Pour permettre un découplage sans à-coup, il est préférable de commander la machine électrique pour qu'elle transmette un couple nul ou très faible au moment du mouvement du baladeur. Pour l'opération de couplage, on utilise de préférence le signal du capter ABS de la roue correspondante pour commander la machine électrique de façon à ce que la couronne adopte un vitesse de rotation identique ou proche de celle du moyeu. On peut alors simultanément provoquer le mouvement du baladeur vers sa position de couplage et imposer à la machine électrique de ne pas résister (couple nul) à une légère accélération ou décélération le temps de ce mouvement de crabotage pour permettre la synchronisation.

Bien que la présente description se concentre sur deux modes de réalisation spécifiques, l'homme du métier sait envisager d'autres combinaisons des différents moyens décrits ici ou d'autres combinaisons de certains de ces moyens avec d'autres moyens non décrits ici mais connus de l'état de la technique.

## Revendications

1. Moyeu motorisé (1) pour la motorisation électrique d'un essieu d'un véhicule automobile à traction hybride, ledit moyeu motorisé comprenant un moyeu (7) destiné à recevoir une roue (2), le moyeu étant monté rotatif par rapport à un porte-moyeu (5) selon un axe de moyeu (A), le moyeu motorisé comprenant une machine électrique de traction (3), la machine électrique comprenant un stator externe (32) lié au porte-moyeu et un rotor interne dont l'axe de rotation (R) est distant de l'axe de moyeu (A), le moyeu motorisé comprenant des moyens de réduction (4) agissant entre le rotor de la machine électrique et le moyeu, le moyeu motorisé comprenant des moyens de couplage/découplage (6) aptes à adopter une position de couplage dans laquelle la rotation de la machine électrique est couplée à la rotation du moyeu et une position de découplage dans laquelle la rotation de la machine électrique est découplée de la rotation du moyeu, le moyeu motorisé étant **caractérisé en ce que** les moyens de couplage/découplage sont disposés entre les moyens de réduction et le moyeu.

2. Moyeu motorisé (1) selon la revendication 1 dans lequel les moyens de couplage/découplage comprennent un mécanisme à crabot et baladeur (61), le baladeur étant coaxial au moyeu (7).

3. Moyeu motorisé (1) selon l'une des revendications précédentes dans lequel les moyens de réduction (4) comprennent un pignon moteur (42) destiné à être lié à l'arbre de la machine électrique et une couronne dentée (45) destinée à être liée au moyeu (7).

4. Moyeu motorisé (1) selon la revendication 3 dans lequel les moyens de réduction comprennent deux étages de réduction.

5. Moyeu motorisé (1) selon la revendication 4 dans lequel un premier étage de réduction est constitué par l'engrenage du pignon moteur (42) et d'une roue dentée (43) liée à un arbre intermédiaire (41), un deuxième étage de réduction étant constitué par l'engrenage d'un pignon de réducteur (44) lié à l'arbre intermédiaire (41) et de la couronne dentée (45) destinée à être liée au moyeu (7).

6. Moyeu motorisé (1) selon la revendication 5 dans lequel l'arbre intermédiaire est parallèle à l'axe de moyeu (A).

7. Moyeu motorisé (1) selon l'une des revendications précédentes dans lequel le porte-moyeu (5) est une fusée autour de laquelle tourne le moyeu (7).

8. Moyeu motorisé (1) selon l'une des revendications précédentes dans lequel un carter (8) contient les moyens de réduction et les moyens de couplage/découplage et porte la machine électrique (3), ledit carter étant monté rotatif par rapport au porte-moyeu (5), cette rotation s'effectuant selon l'axe de moyeu (A).

9. Moyeu motorisé (1) selon l'une des revendications précédentes dans lequel le baladeur (61) est constamment solidaire en rotation des moyens de réduction (45), le baladeur comportant des cannelures intérieures cylindriques, les cannelures du baladeur étant aptes à s'engager, en position de couplage, sur des cannelures extérieures du moyeu.

10. Moyeu motorisé (1) selon l'une des revendications 1 à 8 dans lequel le baladeur comporte des dentures frontales (611) aptes à coopérer, en position de couplage, avec des dentures frontales (451) solidaires de la couronne de moyeu (45).

11. Moyeu motorisé (1) selon l'une des revendications précédentes comprenant en outre un frein à disque (11, 12), le disque de frein étant placé à l'extérieur du carter (8) par rapport au véhicule.

12. Roue motorisée (1, 2) comprenant un moyeu motorisé (1) selon l'une des revendications précédentes.

13. Véhicule comprenant au moins deux roues motorisées selon la revendication 12.

14. Véhicule selon la revendication 13 dans lequel deux roues motorisées sont disposées sur l'essieu arrière dudit véhicule, les porte-moyeux (5) de deux roues motorisées étant chacun solidaires d'un bras tirés (10) de l'essieu arrière.

15. Véhicule selon la revendication 14 dans lequel une bielle (101) contrôle la rotation de chacun des deux carters par rapport à chacun des porte-moyeux.

## Patentansprüche

1. Motorisierte Nabe (1) zum elektrischen Antrieb einer Achse eines Kraftfahrzeugs mit Hybridantrieb, wobei die motorisierte Nabe eine Nabe (7) aufweist, die dazu bestimmt ist, ein Rad (2) aufzunehmen, wobei die Nabe drehbar bezüglich eines Nabenträgers (5) entlang einer Nabenachse (A) angebracht ist, wobei die motorisierte Nabe eine elektrische Antriebsmaschine (3) aufweist, wobei die elektrische Maschine einen mit dem Nabenträger verbundenen Außenstator (32) und einen Innenrotor, dessen Rotationsachse (R) von der Nabenachse (A) entfernt ist, aufweist, wobei die motorisierte Nabe Untersetzungsmittel (4) aufweist, die zwischen dem Rotor der elektrischen Maschine und der Nabe wirken, wobei die motorisierte Nabe Kupplungs-/Entkupplungsmittel (6) aufweist, die geeignet sind, eine Kupplungsposition, in welcher die Rotation der elektrischen Maschine mit der Rotation der Nabe gekuppelt ist, und eine Entkupplungsposition, in welcher die Rotation der elektrischen Maschine von der Rotation der Nabe entkuppelt ist, einzunehmen, wobei die motorisierte Nabe **dadurch gekennzeichnet ist, dass** die Kupplungs-/Entkupplungsmittel zwischen den Untersetzungsmitteln und der Nabe angeordnet sind.

2. Motorisierte Nabe (1) nach Anspruch 1, wobei die Kupplungs-/Entkupplungsmittel einen Klauen- und Schaltmuffen-Mechanismus (61) aufweisen, wobei die Schaltmuffe koaxial mit der Nabe (7) ist.

3. Motorisierte Nabe (1) nach einem der vorhergehenden Ansprüche, wobei die Untersetzungsmittel (4) ein Antriebsritzel (42), das dazu bestimmt ist, mit der Welle der elektrischen Maschine verbunden zu werden, und einen Zahnkranz (45), der dazu bestimmt ist, mit der Nabe (7) verbunden zu werden, aufweisen.

4. Motorisierte Nabe (1) nach Anspruch 3, wobei die Untersetzungsmittel zwei Untersetzungsstufen aufweisen.

5. Motorisierte Nabe (1) nach Anspruch 4, wobei eine erste Untersetzungsstufe aus dem Ineinandergreifen des Antriebsritzels (42) und eines mit einer Zwischenwelle (41) verbundenen Zahnrads (43) besteht, während eine zweite Untersetzungsstufe aus dem Ineinandergreifen eines mit der Zwischenwelle (41) verbundenen Untersetzungsritzels (44) und des Zahnkranzes (45), der dazu bestimmt ist, mit der Nabe (7) verbunden zu werden, besteht.

6. Motorisierte Nabe (1) nach Anspruch 5, wobei die Zwischenwelle parallel zu der Nabenachse (A) ist.

7. Motorisierte Nabe (1) nach einem der vorhergehenden Ansprüche, wobei der Nabenträger (5) ein Schenkel ist, um den sich die Nabe (7) dreht.

8. Motorisierte Nabe (1) nach einem der vorhergehenden Ansprüche, wobei ein Gehäuse (8) die Untersetzungsmittel und die Kupplungs-/Entkupplungsmittel enthält und die elektrische Maschine (3) trägt, wobei das Gehäuse drehbar bezüglich des Nabenträgers (5) angebracht ist, wobei diese Rotation um die Nabenachse (A) erfolgt.

9. Motorisierte Nabe (1) nach einem der vorhergehenden Ansprüche, wobei die Schaltmuffe (61) ständig drehfest mit den Untersetzungsmitteln (45) verbunden ist, wobei die Schaltmuffe zylindrische innere Rillen aufweist, wobei die Rillen der Schaltmuffe geeignet sind, in der Kupplungsposition mit äußeren Rillen der Nabe in Eingriff zu gelangen.

10. Motorisierte Nabe (1) nach einem der Ansprüche 1 bis 8, wobei die Schaltmuffe Stirnzähne (611) aufweist, die geeignet sind, in der Kupplungsposition mit Stirnzähnen (451) zusammenzuwirken, die mit dem Nabenzahnkranz (45) fest verbunden sind.

11. Motorisierte Nabe (1) nach einem der vorhergehenden Ansprüche, welche außerdem eine Bremsscheibe (11, 12) aufweist, wobei die Bremsscheibe bezüglich des Fahrzeugs außerhalb des Gehäuses (8) angeordnet ist.

12. Motorisiertes Rad (1, 2), welches eine motorisierte Nabe (1) nach einem der vorhergehenden Ansprüche aufweist.

13. Fahrzeug, welches mindestens zwei motorisierte Räder nach Anspruch 12 aufweist.

14. Fahrzeug nach Anspruch 13, wobei zwei motorisierte Räder auf der Hinterachse des Fahrzeugs angeordnet sind, wobei die Nabenträger (5) von zwei motorisierten Rädern jeweils mit einem Schwingarm (10) der Hinterachse fest verbunden sind.

15. Fahrzeug nach Anspruch 14, wobei eine Koppel (101) die Rotation jedes der beiden Gehäuse bezüglich jedes der Nabenträger steuert.

## Claims

1. Motorized hub (1) for electric powering of an axle of a hybrid drive automotive vehicle, said motorized hub comprising a hub (7) designed to receive a wheel (2), the hub being mounted rotationally relative to a hub carrier (5) about a hub axis (A), the motorized hub comprising an electric drive motor (3), the electric motor comprising an external stator (32) connected to the hub carrier and an internal rotor whose axis of rotation (R) is remote from the hub axis (A), the motorized hub comprising reduction means (4) acting between the rotor of the electric motor and the hub, the motorized hub comprising coupling/uncoupling means (6) capable of adopting a coupling position in which rotation of the electric motor is coupled to the rotation of the hub and an uncoupling position in which rotation of the electric motor is uncoupled from the rotation of the hub, the motorized hub being **characterized in that** the coupling/decoupling means are arranged between the reduction means and the hub.

2. Motorized hub (1) according to Claim 1, in which the coupling/uncoupling means comprise a dog clutch and sliding member mechanism (61), the sliding member being coaxial with the hub (7).

3. Motorized hub (1) according to one of the preceding claims, in which the reduction means (4) comprise a drive pinion (42) intended to be connected to the shaft of the electric motor and a toothed ring (45) intended to be connected to the hub (7).

4. Motorized hub (1) according to Claim 3, in which the reduction means comprise two reduction stages.

5. Motorized hub (1) according to claim 4, in which a first reduction stage consists of meshing of the drive pinion (42) and a toothed wheel (43) connected to an intermediate shaft (41), a second reduction stage consisting of meshing of a reduction pinion (44) connected to the intermediate shaft (41) and the toothed ring (45) designed to be connected to the hub (7).

6. Motorized hub (1) according to Claim 5, in which the intermediate shaft is parallel to the hub axis (A).

7. Motorized hub (1) according to one of the preceding claims, in which the hub carrier (5) is a stub axle around which the hub (7) turns.

8. Motorized hub (1) according to one of the preceding claims, in which a casing (8) contains the reduction means and the coupling/uncoupling means and carries the electric motor (3), said casing being mounted rotationally relative to the hub carrier (5), said rotation taking place about the hub axis (A).

9. Motorized hub (1) according to one of the preceding claims, in which the sliding member (61) is constantly connected for rotation with the reduction means (45), the sliding member comprising internal cylindrical grooves, the grooves of the sliding member being capable of engaging, in the coupling position, with external grooves on the hub.

10. Motorized hub (1) according to one of Claims 1 to 8, in which the sliding member comprises frontal toothing (611) capable of interacting, in the coupling position, with frontal toothing (451) integral with the hub ring (45).

11. Motorized hub (1) according to one of the preceding claims, further comprising a disk brake (11, 12), the brake disk being positioned outside the casing (8) relative to the vehicle.

12. Motorized wheel (1, 2) comprising a motorized hub (1) according to one of the preceding claims.

13. Vehicle comprising at least two motorized wheels according to Claim 12.

14. Vehicle according to Claim 13, in which two motorized wheels are arranged on the rear axle of said vehicle, the hub carriers (5) of two motorized wheels each being firmly connected with a trailing arm (10) of the rear axle.

15. Vehicle according to Claim 14, in which a connecting rod (101) controls rotation of each of the two casings relative to each of the hub carriers.
